# EUROPEAN PATENT SPECIFICATION

(11) **EP 3 104 691 B1**
(45) Date of publication and mention of the grant of the patent: **12.06.2019**
(21) Application number: 15709420.2
(22) Date of filing: 10.02.2015
(51) Int. Cl.: A01J 25/12, A01J 25/13

(54) **A METHOD FOR RELEASING A CHEESE FROM A MOULD**
VERFAHREN ZUM LÖSEN VON WEICHKÄSE AUS EINER FORM
PROCÉDÉ PERMETTANT DE DÉMOULER UN FROMAGE D'UN MOULE

(30) Priority: 12.02.2014 SE 1450156
(43) Date of publication of application: 21.12.2016
(73) Proprietor: Tetra Laval Holdings & Finance SA, 1009 Pully (CH)
(72) Inventor: SPIJKERMAN, Harrie, NL-8191 LP Wapenveld (NL)
(74) Representative: Tetra Pak - Patent Attorneys SE
(86) International application number: PCT/EP2015/052769
(87) International publication number: WO 2015/121259

(56) References cited:
- AU-A- 1 466 176
- DE-A1- 3 134 607
- FR-A1- 2 473 840
- US-A- 5 082 681

## Description

### Technical Field

The invention generally relates to the field of cheese manufacturing, more particularly the field of cheese moulds and cheese mould handling.

### Background of the invention

Today, within cheese production it is common practice to use moulds consisting of a mould body for draining, pressing, rind forming and shape-forming of a block, or bed, of curd, and a lid which can be moved inside the mould body for curd pressing. During cheese production a pressure is applied on the lid such that whey is pushed out of the curd block via apertures in the mould body and lid. By pressing the curd particles are pushed more closely to each other to support fusing (interconnecting) of the curd to a stable cheese body, pressing may be as less as gravity, but most commonly external force, for example by means of a pneumatical cylinder, is applied to the lid forcing it to move further inside the mould. The pressure, depending on the intensity of force, can also create a closed cheese surface, the rind, as a result of draining the curd particles at the outer side of the latter cheese, and deforming them to the surface structure of the mould body and lid, often having a rigidised surface. The form, shape, dimensions, further all called form, of the mould varies depending on the desired form of the final cheese to be emptied from the mould after processing. As an example, since many cheeses are in the form of so-called block alike shapes, a specific popular form being Euroblock, it is common that the mould body has a rectangular cross section, but also mould bodies with radius curves are well known, alike Dutch wheel shape, and even blocks with non even mould surfaces (for example for brand printing in the cheese surface) are becoming more popular. Further information about Cheese production can be read in "Dairy Processing Handbook", Second revised edition, 2003, published by Tetra Pak Processing Systems AB, ISBN 91-631-3427-6.

When placing the curd to or removing the cheese from the mould care needs to be taken such that the curd or cheese is not deformed. Throughout the years different technologies for achieving this have been developed.

Traditionally, removing cheese from the mould is done by manually removing the cheese from the mould as a combination of loosening the cheese from the mould surface by shaking and turning the mould, but this takes time and can lead to extra damages to the cheese.

In automatic systems removing the cheese is done by opening the mould body by removing a mould lid, turning the mould body, and then removing the cheese by allowing or making the cheese to glide downwards from the mould body. As the cheese is often attached to a surface of the mould body additional force is used to force the cheese out, most commonly by use of pressurised air aided through the bottom of the mould body. This however has a known negative side effect that this airstream is making whey and curd fines to become air born and thus fouling the environment around the de-moulding unit. Further, the air must be of high hygienic quality to avoid contamination of the cheese surface. In addition the pressurised air supply unit can introduce hygienic issues as it gets contaminated with product remains which leads to undesired growth of microflora infecting future cheeses to be pushed from moulds. Forcing the cheese out this way can also lead to undesired deformations of the cheese leading to quality issues as cracks and pinholes.

An alternative system is to remove the cheese with vacuum. After removing the mould lid a cheese shape alike plate is lowered to the cheese surface, vacuum is formed between the plate and cheese thus pulling the cheese surface to the plate, at sufficient vacuum the plate thus can pull the cheese from the mould body. Side effect is that this method is not useable for all cheese forms, and during vacuum stage the cheese surface is and needs to be deformed which can lead to quality issues regarding rind and rind area. In addition the vacuum plate can introduce hygienic issues as it gets contaminated with product remains which leads to undesired growth of microflora infecting future cheeses to be pushed from moulds. Also this method is more sensitive for altering circumstances, such as progressive pH development in cheeses at disturbed mould handling sequences.

According to another system for de-moulding the mould can be placed upside down and then by vibrating the mould the cheese can be released. A drawback with this method is that the cheese may be damaged, it is time consuming, less reliable and sensitive for altering circumstances, such as progressive pH development in cheeses at disturbed mould handling sequences.

All of the above mentioned alternatives may be assisted by the addition of heating means to the mould.

Based on the above, there is a need for a more gentle handling of the cheeses when these are to be demoulded, i.e. released from the moulds.

Similarly, when placing the curd in the mould, also referred to as moulding, it is important to make sure that this is done as gently as possible. If the curd is damaged when being fed into the mould it may lead, for instance, to a non-uniform cheese.

Also the curd must be well distributed in the mould, otherwise it may lead to deviations in the latter cheese, for example form-deviations due to uneven pressing, non closed or insufficient pressed rind areas and inner structure deviations as whey pockets, eye-clusters or cracks.

A common technique for moulding is to form a drained and pre-shaped curd bed, for instance by using a so-called drainage column, such as Tetra Tebel Casomatic marketed by Tetra Pak, and to cut the curd bed into curd blocks. After being cut off the curd blocks are released down into a mould placed below. A drawback of this technique is that it may damage the curd blocks, create losses of curd and quality issues within the curd block, e.g. pinholes, and form deviations occur to displaced curd blocks, e.g. placed out of mould centre during moulding.

An alternative technique is a so-called pre-pressvat in which a horizontal curd bed is created from a fed whey and curd mixture by draining whey via the curd bed supporting bottom or side walls and pre-pressing the formed curd bed, after which blocks are cut from this pre-formed curd bed and lowered/dropped or otherwise transferred into a mould leading to similar risks as on above mentioned drainage column systems

Another well known technique is to directly feed whey and curd mixture into a mould. In the mould, whey can expel through micro perforations and curd remains as a compact curd bed in the mould. The risk of this specific procedure is that the drainage properties are not stable as micro perforations can get stuck with small product parts as curd fines and thus moisture and weight accuracy and form stability of the produced cheese and per consequence sensory properties may be negatively influenced.

Therefore, there is a need to provide a more gentle and better controlled handling of the curd when curd is placed in the mould.

After moulding and de-moulding, the mould is cleaned and, if not to be used directly, stored before being used again.

In mould cleaning systems commonly used today, the mould is turned upside down to enable proper removal of product remains and cleaning liquid and to reduce the risk that curd residues or cleaning solution are captured in the mould. After the mould is cleaned using a combinatoin of water and cleaning detergents, and is dried / drained, the mould is turned again to an upright position.

Another cleaning method is to submerge moulds into a cleaning liquid and remain them for a specific time, often under addition of supporting actions as vibrations, ultravibrations, flow enforcements, airbubbles, all to excellerate and improve the effect of cleaning agents to the to be removed fouling.

A problem with the current cleaning systems for moulds is that it has proven to be difficult to clean the inner corners of the mould body and the apertures efficiently, both in terms of efficiency in cleaning (product remains and micro flora removal / deactivation) as on consumption of water and cleaning solution, and from a time aspect.

Examples of prior art cheese moulds can be found in patent documents AU1466176A, DE3134607A1 and US5082681A.

### Summary

Accordingly, the present invention preferably seeks to mitigate, alleviate or eliminate one or more of the above-identified deficiencies in the art and disadvantages singly or in any combination and solves at least the above mentioned problems.

According to the invention it is provided a method comprising placing curd in a mould, said mould comprising a hollow body provided with a first opening and a second opening, applying a pressure force on said curd such that said curd is transformed into a cheese and such that said cheese is moved towards said second opening, and releasing said cheese from said mould via said second opening.

The step of releasing said cheese from said mould via said second opening is achieved by exerting a releasing force directed towards said second opening on said cheese.

The releasing force may be provided by a pusher arm provided via said first opening.

According to the invention the step of releasing said cheese from said mould is achieved by providing for that said hollow body is moving towards said second opening, and stopping said hollow body from moving towards said second opening such that a resulting inertia of said cheese will give rise to said releasing force.

According to the invention the step of providing for that said hollow body is moving towards said second opening is achieved by letting said hollow body fall down, and said step of stopping said hollow body from moving towards said second opening such that a resulting inertia of said cheese will give rise to said releasing force is achieved by providing said hollow body with an outer edge, and having an element capturing said hollow body by using said outer edge.

The curd may be placed in said mould via said first opening.

A second lid, placed in said hollow body, may be moved towards said second opening as curd is placed in said mould via said first opening.

The curd may be placed in said mould via said second opening.

A first lid, placed in said hollow body, may be moved towards said first opening as curd is placed in said mould via said second opening.

A mould is described, comprising a hollow body provided with a first opening and a second opening, such that a cheese held in said mould can be released via said second opening.

The mould may further comprise a second lid arranged to be placed in said second opening, wherein said hollow body and said second lid are separate elements.

According to the invention the hollow body is provided with an outer edge.

A system is described, comprising a curd filling apparatus arranged to place curd in a mould according to the second aspect, a pressing apparatus applying a pressure force on said curd in said mould such that said curd is transformed into a cheese, and a cheese releasing apparatus providing for that said cheese in said mould is released via said second opening.

The cheese releasing apparatus may comprise a pusher arm being inserted in said hollow body via said first opening and pushing out said cheese via said second opening.

The cheese releasing apparatus may be arranged to provide for that said hollow body holding said cheese falls and for that said hollow body is stopped from falling such that said cheese is released from said hollow body.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig 1a-1g illustrate a mould in different stages of a process including moulding, pressing and de-moulding.
Fig 2a-2g also illustrate a mould in different stages of another process including moulding, pressing and de-moulding.
Fig 3a-3d illustrates an example of a moulding process, more particularly a moulding process using direct dosing in mould.
Fig 4a-c illustrate a process on how a slide cassette can be used during moulding.
Fig 5a-c illustrate another process on how a slide cassette can be used during moulding.
Fig 6a-6c illustrate a process on moulding of loose curd.
Fig 7a-6c illustrate another process on moulding of loose curd.
Fig 8a-d illustrate a moulding process in which the mould is filled from below.
Fig 9a-d illustrate another moulding process in which the mould is filled from below.
Fig 10a-d illustrate a process for filling curd and whey mixture into a mould.
Fig 11a-d illustrate another process for filling curd and whey mixture into a mould.
Fig 12a-d illustrate a process for de-moudling a cheese from a mould.
Fig 13a-d illustrate another process for de-moudling a cheese from a mould.
Fig 14a-d illustrate yet another process for de-moudling a cheese from a mould.
Fig 15a-c illustrate still another process for de-moudling a cheese from a mould.
Fig 16a-e illustrate a further process for de-moudling a cheese from a mould.
Fig 17 illustrates a cleaning line for moulds.
Fig 18 illustrates another cleaning line for moulds.
Fig 19a-c illustrates an approach for cleaning moulds.
Fig 20a-c illustrates another approach for cleaning moulds.
Fig 21a-b illustrates yet another approach for cleaning moulds.
Fig 22a-b illustrates still another approach for cleaning moulds.

### Detailed description of preferred embodiments

Semi-hard and hard cheese production can be divided in the main steps of pre-treating the milk, producing curd, draining and pressing the curd into cheese, brining the cheese, and storing/ripening the cheese. The step of pre-treating the milk often comprise sub-steps, such as heat treating in order to significantly reduce the number of active micro organisms, especially the pathogenic types, and standardization the milk to for example fat to protein ratio in order to achieve a certain fat content in the final cheese. The step of curd production can comprise adding rennet or another coagulant type and starter culture and other cheese specific ingredients, stirring and cutting, removal whey and addition of water and altering temperatures during processing such that curd of the right properties (e.g. shape, contents, pH) is produced. The non-bound whey is after curd processing drained from the curd, and the drained curd is filled into moulds often by use of a draining, forming and portioning unit, such as Tetra Tebel Casomatic units or others. In the pressing step, force (often by means of a pneumatic driven cylinder) can be applied onto the curd such that excess whey is pushed out, curd is pushed closely together resulting in interconnections between them (fusing), curd lying directly to the mould surfaces are deformed to the mould surface resulting in a rind and after time a cheese is formed. In the brining step, the cheese is often placed in salty bath. Lastly, the cheese is stored. Further details can, for example, be read in Dairy Processing Handbook, second revised edition 2003, published by Tetra Pak Processsing Systems AB.

A step of placing the curd in the mould is often referred to as moulding. In large scale cheese production lines of today the moulding step can be that a piece of curd block is formed by a e.g. drainage column and placed in a mould. More particularly, the curd block can be output from the drainage column to a transfer-interface, for example a slide cassette, and from the slide cassette to the mould.

A step of removing the cheese from the mould is often referred to as de-moulding. This can be performed by pushing out the cheese by using pressurized air, shaking out the cheese, i.e. using vibrations, or using a vacuum head for pulling out the cheese.

It has been realized that instead of using a traditional mould with side walls and a bottom in one piece, a mould comprising a hollow body and a bottom lid can be used.

In the moulding step, an advantage of having the bottom lid and the hollow body as two parts is that the bottom lid may be lowered as curd is fed into the mould, or alternatively the mould lid may be used for this. A positive result of this is that a more gentle handling of the curd can be achieved, which in turn means that waste or quality issues in latter cheese can be reduced. Still an advantage is that the drainage column can feed the piece of curd directly into the mould, thereby preventing unnecessary transfer movements with the cheese (losses and quality issues) making it possible to omit the transfer-interface, such as a slide cassette and in turn to save costs.

At direct feed of whey and curd into the mould the possibility of lowering the bottom plate limits blockage of new released micro perforations of the mould body as already formed curd bed is filtering/capturing small particles as curd fines from incoming feed and thus preventing them to block the mould perforations.

In the de-moulding step, an advantage of having the mould with the hollow body is that the cheese can be pushed out from the mould in the same direction as the pressure force has been applied. This means, for instance, if the curd is pressed towards the bottom lid, that the curd can be released via the bottom when being de-moulded. This means in turn that the distance the cheese will need to travel inside the hollow body is kept short. Since there is a known risk that the cheese is damaged when being transferred within the hollow body, this risk is lower when using a mould comprising a hollow body compared to a traditional mould. As the distance for transfer is shorter combined with the fact that the cheese surface on which demoulding force is aided is supported in full exactly corresponding to the cheese form significantly reduces the risk of deformations to the cheese at de-moulding, deformations which are known risks to occurring quality issues as cracks and pinholes. Physical and Microbiological contamination to cheeses and environment around demoulding is significantly reduced as no air (pressurised or vacumised) is directly used in contact to cheese and mould. Further, an advantage is that the cheese may be weighed during demoulding, and as such direct demoulding directly into a brine bath avoiding contact to interface transfer systems as belts with its microbiological contamination risks is possible to do.

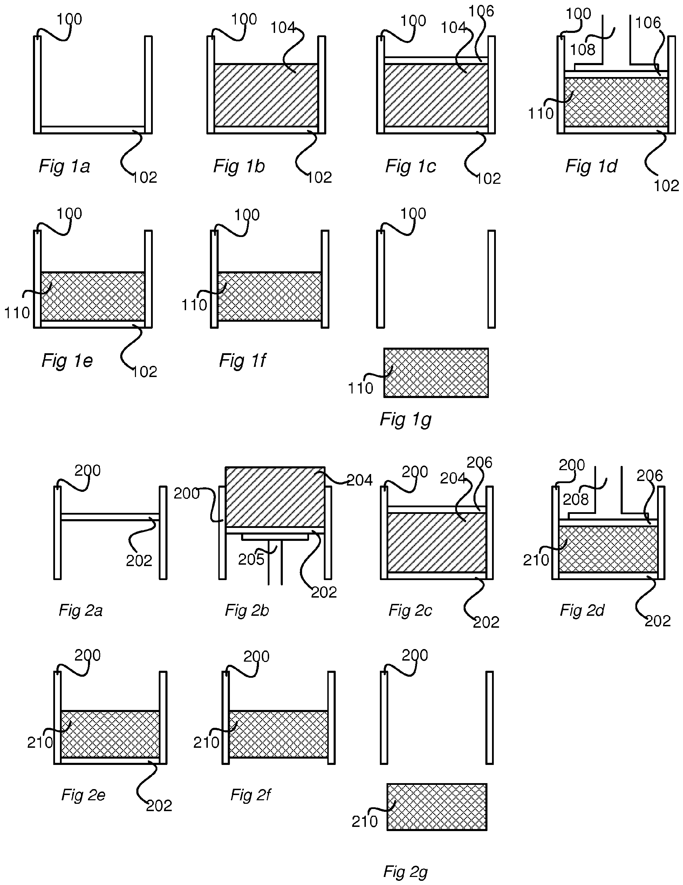

In fig 1a-1g, a mould in different stages of a process including moulding, pressing and de-moulding is illustrated.

In fig 1a the mould comprising a hollow body 100 and a bottom lid 102 is prepared for receiving curd from, e.g. a drainage column, in that the bottom lid 102 is placed in a lower part of the hollow body.

Next, in fig 1b, curd 104 is fed into the hollow body 100. As illustrated, the curd 104 can be held by the hollow body 100 and the bottom lid 102.

Before applying a pressure on the curd a top lid 106 can be placed on top of the curd, as illustrated in fig 1c. Alternatively the top lid 106 is used during moulding, and after moulding the bottom lid 102 is used to enclose the mould after moulding prior to pressing.

When applying a pressure, e.g. by using a pneumatic cylinder 108, as illustrated in fig 1d, whey is pressed out from the curd and curd particles are pressed together such that the curd is transformed into a cheese 110 having a stable, well defined rind. For semi-hard and hard cheese it is common to apply a pressure for a couple of hours, even though it may vary e.g. depending on the type of cheese to be produced.

As illustrated in fig 1e, after having pressed the curd into cheese, the top lid 106 can be removed. The top lid can be removed by pneumatic cylinder 108 or by a device dedicated for removing the top lid 106.

After having removed the top lid 106, the bottom lid 102 can be removed, as illustrated in fig 1f. The bottom lid 102 can be removed by moving the bottom lid sideways, or downwards out from the interior of the hollow body and then sideways, such that the likelihood that friction between the cheese and the hollow body keep the cheese in place is higher compared to removing the bottom lid downwards.

In the illustrated example, the top lid 106 is removed before the bottom lid 102. However, another option is to remove the bottom lid 102 before the top lid 106, alternatively the top lid 106 and bottom lid 102 may be removed simultaneously.

After having the top lid and bottom lid removed, the cheese 110 can be released through the lower end of the hollow body, as illustrated in fig 1g. An advantage of releasing the cheese through the lower end of the hollow body is that there is no need to turn the mould upside down. Further, since the distance the cheese is transported within the hollow body is shorter by using the process illustrated in fig 1a-1g compared to corresponding process for traditional moulds, the de-moulding can be done in a more gentle and controlled manner compared to the de-moulding with traditional moulds. Still an advantage is that the cheese may be released directly into a brine bath and weight of the cheese can be determined by the loss of weight of the mould body measured with a not drawn apparatus supporting the mould body.

As an alternative to the mould illustrated in fig 1a-1g, in fig 2a-2g a mould in different stages of a process including moulding, pressing and demoulding is illustrated.

As illustrated in fig 2a, the mould can comprise a hollow body 200 and a bottom lid 202. When preparing the mould for receiving curd the bottom lid 202 can be placed in an upper part of the hollow body 202 such that the bottom lid 202 can be lowered as curd is fed into the mould.

Referring to fig 2b, when lowering the bottom lid a pneumatic cylinder 205, or actuator, may be used. More particularly, by lowering a curd block 204 fed out from e.g. a drainage column the curd block may gently be placed in the mould. Due to friction between the bottom lid and side walls of the hollow body, an alternative to using the pneumatic cylinder 205, is to let the curd block itself push down the bottom lid to final position in the lower end of the mould.

In fig 2c the bottom lid 202 is placed in the lower end of the hollow body 200 and a top lid 206 is placed on top of the curd block 206.. Alternatively the top lid 206 is used during moulding, and after moulding the bottom lid 202 is used to enclose the mould after moulding prior to pressing.

Next, in fig 2d, a pneumatic cylinder 208 applies a pressure on the top lid 206 such that, in the course of a few hours normally, the curd block is transformed into a cheese 210, though not a final product since brining and ripening still remain to be done.

In fig 2e and 2f, the top lid 206 and the bottom lid 202 are removed. As illustrated, the top lid can be removed before the bottom lid, but the opposite order is possible as well, or removal can be done simultaniously.

As illustrated in fig 2g, the cheese 210 can be released downwards, in the same way as described in relation to fig 1g.

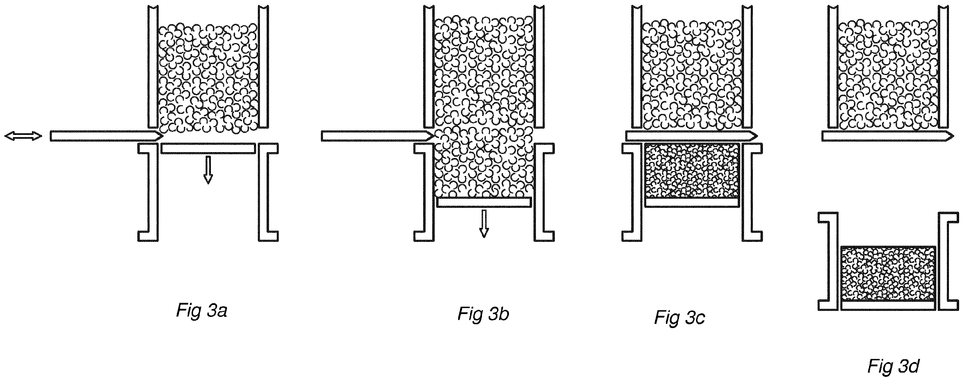

Fig 3a-3d illustrates a further example of a moulding process, more particularly a moulding process using direct dosing in mould.

In fig 3a, a mould, with a hollow body and a bottom lid placed in an upper part of said mould, is placed under a drainage column. Curd is fed into the mould by removing a knife from a lower part of the drainage column such that curd due to gravity is fed into the mould.

As illustrated in fig 3b, as curd is fed into the mould a bottom lid can be lowered. The bottom lid can either be pushed down by the curd or the bottom lid may be lowered by using e.g. pneumatic cylinder such that the filling of the mould can be actively controlled.

When a target weight and/or volume of curd have been fed into the mould the knife cuts off the curd such that a curd block is formed. The knife is often embodied as a plate having a sharp edge. By having the knife embodied in this way, the knife will after having cut off the curd provide for that the curd stays in the drainage column, as illustrated in fig 3c.

As illustrated in fig 3d, after having provided curd into the mould, the bottom lid can be lowered further such that the mould is prepared for pressing. In the example illustrated in fig 3d the bottom lid is lowered such that a lower surface of the hollow body is aligned with the lower surface of the bottom lid. By doing so, both lower surfaces may be in contact with e.g. a conveyor during pressing.

An advantage of this direct dosing in mould approach is that less equipment is needed, which of course reduces cost. Major advantage although is that curd is fed more gentle to the mould with less direct product losses and indirect losses due to resulting quality issues (as cracks and pinholes).

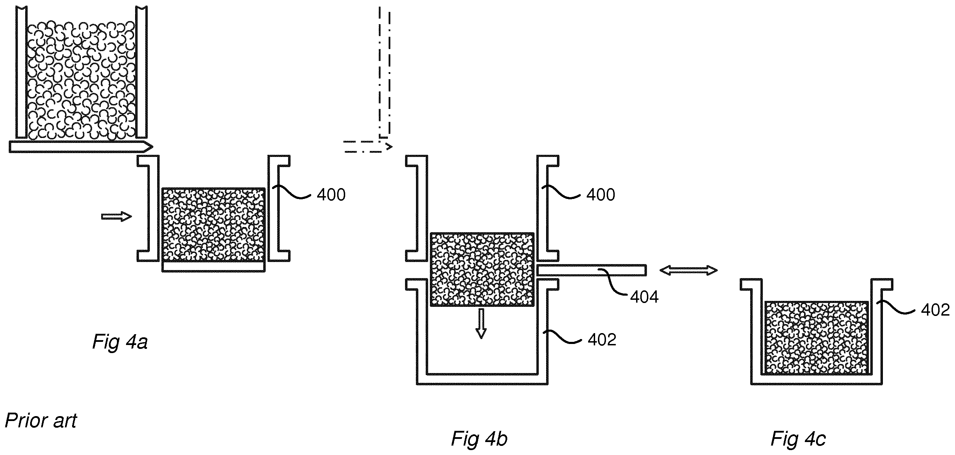

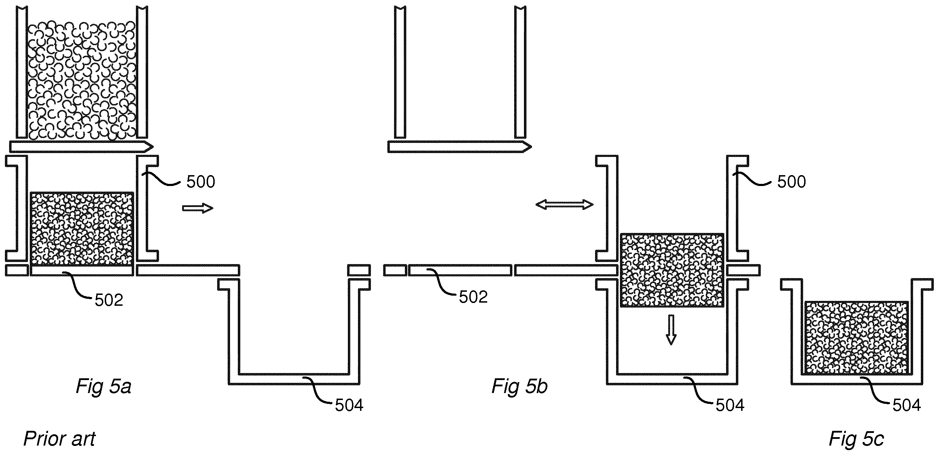

Today, since traditional moulds do not comprise a hollow body the direct filling in mould approach illustrated in fig 3a-3d, cannot be used. Instead it is common practice to use a transfer interface, such as the drawn slide cassette for transporting curd from the drainage column to the traditional mould. Fig 4a-c and fig 5a-c illustrate two different processes on how the slide cassette can be used.

In fig 4a, after having fed curd from a drainage column into a slide cassette, the slide cassette is moved away from the drainage column.

As illustrated in fig 4b, after having placed the slide cassette 400 above a traditional mould 402, a bottom section 404 of the slide cassette is removed such that the curd block falls down into the mould.

When having the curd block placed in the traditional mould 402, as illustrated in fig 4c, the traditional mould can be transferred to a pressing stage.

As an alternative to the process illustrated in fig 4a-4c, after having fed curd into a slide cassette 500, the slide cassette holding the curd block can be slided away from a bottom section 502 along a plane surface towards a traditional mould 504, as illustrated in fig 5a. The bottom section 502 may be a so-called dosing plate used for making sure that a correct weight of curd is fed into the slide cassette.

By having the traditional mould 504 placed lower with respect to the plane surface the cheese will fall down into the traditional mould, as illustrated in fig 5b.

When having the curd block placed in the traditional mould 504, as illustrated in fig 5c, the traditional mould can be transferred to a pressing stage.

By using the direct dosing in mould approach illustrated in fig 3a-3d instead of the processes using slide cassette, illustrated in fig 4a-4c and fig 5a-5c, a number of advantages are achieved.

Firstly, an improved hygiene is achieved. Using a slide cassette and transfer surfaces implies namely that one and the same part is in contact with a number of curd blocks, which in turn increases the risk that unwanted microorganisms can be spread.

Also at shifts between product types the risk of finding product remains of previous product in the new product type is significantly lowered.

Secondly, since there is no slide cassette and transfer surfaces transporting the curd block from the drainage column to the mould the risk of damaging the curd blocks is reduced, having the positive effect that less curd blocks are damaged and that product losses are held low.

Thirdly, the direct dosing in mould has the positive effect that the time needed for placing the curd blocks in the moulds can be reduced, which in turn has the positive effect that cheese production lines with higher capacity can be made.

With reference to fig 3, fig 4 and fig 5, moulding processes for a system comprising a drainage column are presented. However, also in the case when curd that has not been formed into a curd block by the drainage column is filled into the mould, the mould comprising the hollow body and the bottom lid is advantageous to use.

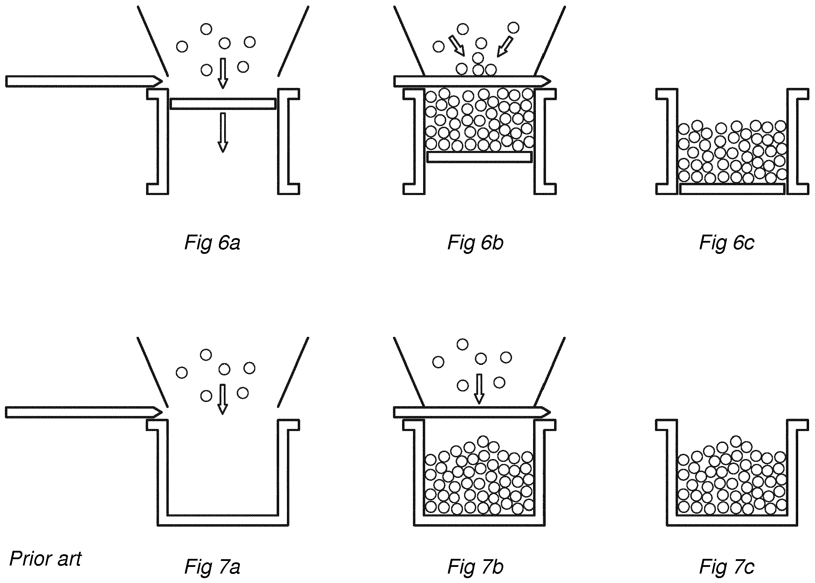

As illustrated in fig 6a, 6b and 6c, when filling curd into the mould while lowering the bottom lid an even surface of the curd in the mould can be achieved. If using the traditional mould instead, as illustrated in fig 7a, 7b and 7c, the curd will fall down into the traditional mould, i.e. is fed in a less controlled manner, with the result that a less even surface is achieved.

An even surface has the positive effect that there is less deformation of the curd during pressing. Resulting advantages are that there is more constant moisture content throughout the cheese, that there is less defects in the cheese, such as whey residues, whey pockets and clusters of eye formation, and format stability of the latter cheese is improved.

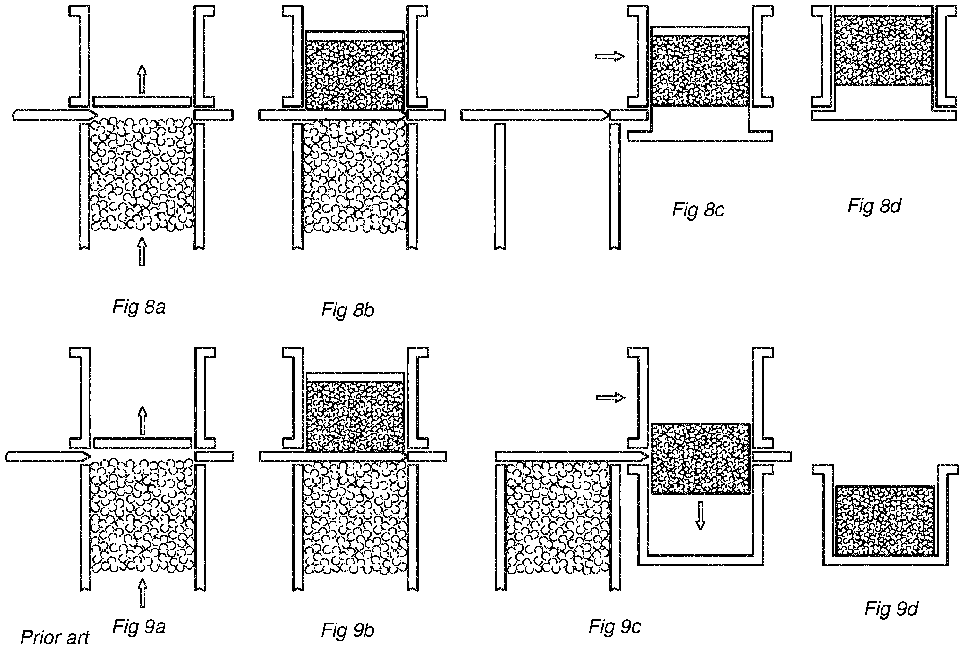

As illustrated in fig 8a-8d, instead of filling the mould with a pre-shaped and drained curd bed from above the mould may be filled from below.

Fig 8a illustrates that a top lid may be placed in a lower part of the mould and be pushed upwards as the curd bed is fed upwards into the mould. After having fed sufficient curd bed into the mould, a knife can be used for cutting of the curd bed, as illustrated in fig 8b. Next, the mould may be slided onto a bottom section, as illustrated in fig 8c and 8d, and then transferred to a pressing station. It is possible to introduce a pre-pressing stage by pressing the curd between the top lid and the bottom section before transferring the mould to the pressing stage, this stage is not drawn. It also is not functionally required anymore as at reference process.

At filling from below and using traditional moulds, as illustrated in fig 9a-9c, curd bed is pushed up into a transfer interface, such as a slide cassette, as illustrated in fig 9a. After having filled the slide cassette, a knife is used for cutting off the curd bed, as illustrated in fig 9b. Next, the slide cassette is slided onto the traditional mould and released in this, as illustrated in fig 9c. When having the curd placed in the traditional mould, this can be transferred to a pressing station, as illustrated in fig 9d. It is common to use a pre-pressing stage before lowering the curd block into the mould by pressing the curd in the slide cassette in a non drawn intermediate stage between the top lid and the transfer surface before lowering the curd block into the mould making the block more rigid to withstand the moulding step with limited product losses and quality issues.

As mentioned such an intermediate pre-pressing step is not required at direct mould filling. Also product losses and quality risks are significantly reduced at direct mould filling.

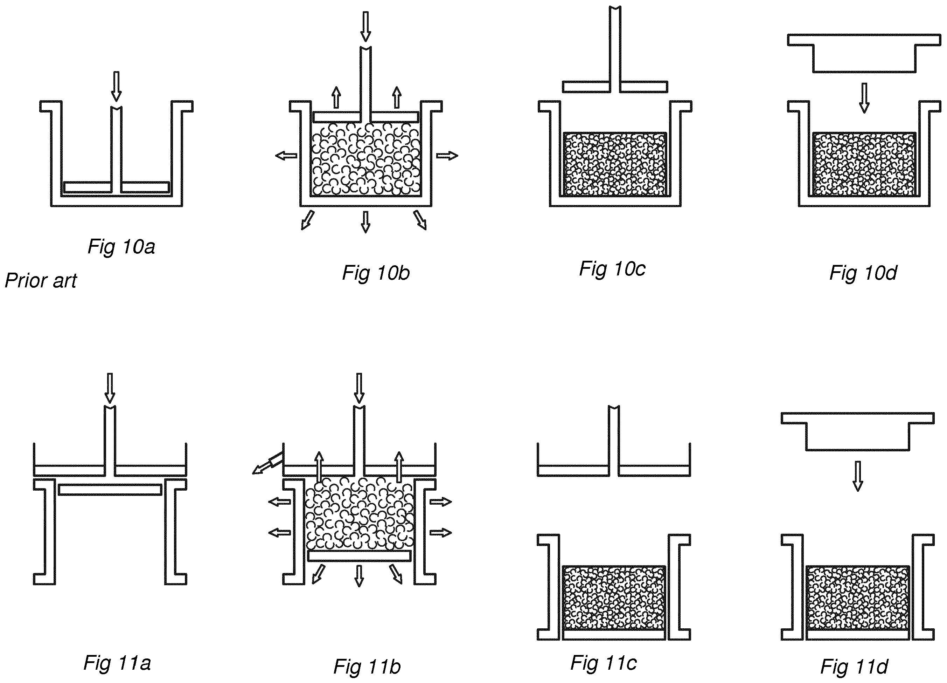

If filling a curd and whey mixture into a traditional mould, it is common practice to place a dosing and whey drainage plate in the bottom of the traditional mould, as illustrated in fig 10a. The dosing plate is lifted upwards as curd and whey mixture is fed into the traditional mould, as illustrated in fig 10b. Due to the perforations in the traditional mould and the dosing plate excess whey can be released.

After having filled the traditional mould the dosing plate is removed, as illustrated in fig 10c, and a top lid is applied on top of the curd, as illustrated in fig 10d.

If using the mould comprising the hollow body, the process can be done differently, as illustrated in fig 11a-11d. In fig 11a it is illustrated that a bottom lid can be placed in an upper part of the hollow body and the dosing plate can be placed on top of the mould.

As curd and whey mixture is fed into the mould, the bottom lid is pushed downwards, successively forming additional room for the curd and whey mixture. Excess whey can be released through perforations in the dosing plate, the mould and the bottom lid.

After having filled the mould the dosing plate is removed, as illustrated in fig 11c, and a top lid can be placed on top of the curd, as illustrated in fig 11d.

An advantage of using the mould with the hollow body and the bottom lid, as illustrated in fig 11a-11d, is that as curd is fed into the mould and the bottom lid is lowered additional perforations in a lower part of the mould is made accessible, perforation which are not previously use for whey drainage and perforations which lie at the lower end of the formed curd-bed, a curd bed which acts as filtering agent keeping small particles as curd fines away from it. This leads to improved drainage (during mould filling and latter pressing when the mould lid is pulled to lowest position opening up new drainage area of the mould), in turn implying improved weight and moisture accuracy and format stability. Further, the process illustrated in fig 11a-11d, has the effect that less defects in the curd bed are formed.

During de-moulding, i.e. when the cheese is released from the mould, the mould comprising a hollow body has several advantages.

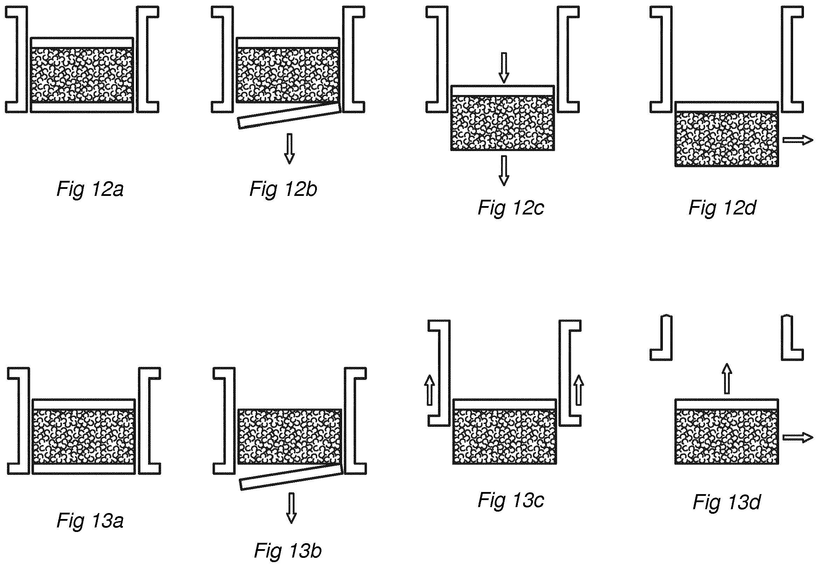

Fig 12a-12d illustrates an example of a process for de-moulding a cheese from the mould comprising the hollow body.

Fig 12a illustrates a mould having a hollow body, a bottom lid placed under the cheese and a top lid placed on top of the cheese.

In order to remove the bottom lid, this can be lifted in one end, as illustrated in fig 12b. One reason for lifting the bottom lid in one end is that the risk that the cheese comes along is reduced and also deformations and damages to the cheese surfaces are reduced
After having removed the bottom lid a force may be applied on the top lid such that the cheese and top lid are pushed down, as illustrated in fig 12c. As such the cheese is all the time in full supported by the top lid driving the cheese down preventing deformations.

When the cheese is pushed out from the hollow body the cheese can be transported to e.g. a brine bath, or as an alternative, pushed directly into the brine bath. The weight of the cheese can be detected as lost weight from the mould body when releasing the cheese.

Fig 13a-13d illustrates another example of a process for de-moulding the cheese from the mould comprising the hollow body.

Fig 13a illustrates the mould having the hollow body, a bottom lid placed under the cheese and a top lid placed on top of the cheese.

The bottom lid may be removed by lifting the bottom lid in one end, as illustrated in fig 13b.

Next, in order to release the cheese, the hollow body can be lifted upwards such that cheese is separated from the hollow body, as illustrated in fig 13c and 13d. As such the cheese is all the time in full supported by the top lid driving the cheese down preventing deformations.

After having released the cheese from the hollow body, the top lid can be removed, as illustrated in fig 13d.

If using a traditional mould de-moulding is made in different ways. Two common approaches are lifting the cheese from the mould using a vacuum head, and using pressurized air for releasing the cheese downwards from the traditional mould.

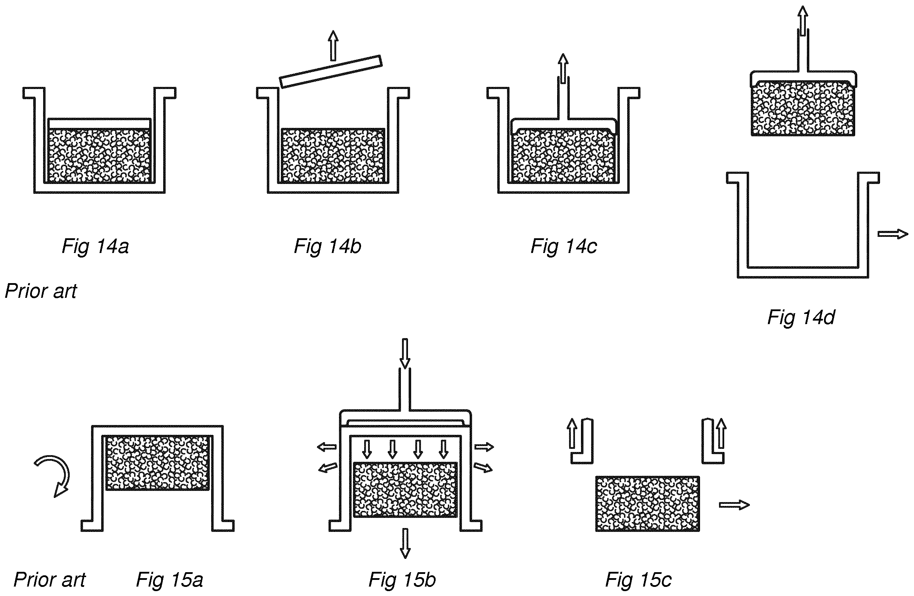

Fig 14a illustrates a traditional mould holding a cheese with a top lid placed on top of the cheese. In order to release the cheese from the mould, the top lid is removed as a first step, as illustrated in fig 14b. After having the top lid removed, a vacuum head is placed on top of the cheese and a vacuum is formed, as illustrated in fig 14c. When having the vacuum head attached to the cheese, the cheese can be lifted up from the traditional mould, as illustrated in fig 14d.

Fig 15a-15c illustrates another approach for releasing the cheese from the traditional mould. After having removed the top lid, the traditional mould holding the cheese is placed upside down, as illustrated in fig 15a. In order to release the cheese from the traditional mould, pressurized air may be pushed into the traditional mould via bottom perforations, as illustrated in fig 15b. Due to gravity and the force formed by the pressurized air, the cheese is released from the traditional mould, as illustrated in fig 15c, and can thereafter be sent to the brine bath.

There are a number of advantages with using the mould comprising the hollow body compared to traditional moulds. Firstly, there is no need for using vacuum heads, pressurized air or the like. An advantage of omitting the vacuum head and pressurised air plate is that the risk for contamination is reduced. Another advantage is that cheese deformation is significantly reduced as deformations are functionally required at vacuum and pressurised air demoulding methods. An advantage of omitting the pressurized air is that less whey and product fines aerosols are spread to the surroundings.

Further, as an effect of that the cheese can be released via the bottom end of the mould and that the cheese is placed in the bottom after pressing, the distance the cheese is travelling within the hollow body is shorter in the mould comprising the hollow body compared to the traditional mould, the risk that the cheese is deformed or damaged is reduced.

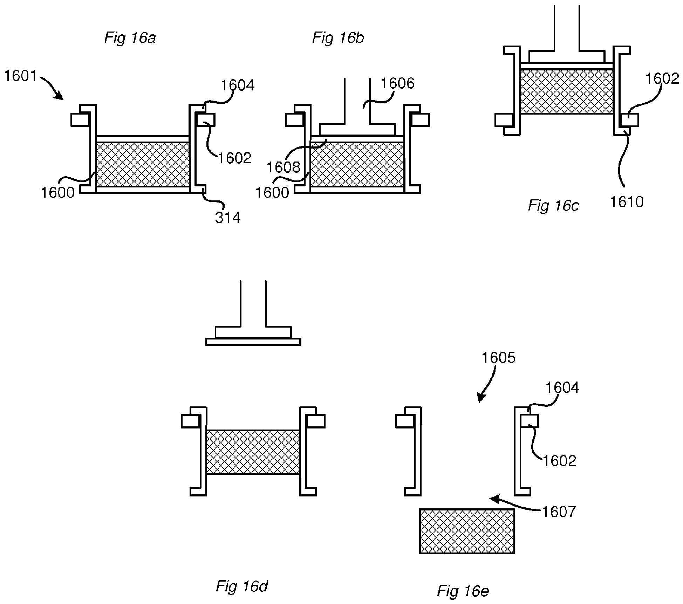

In fig 16a-e, yet another process for de-moulding the cheese from the hollow body mould to the brine bath (or if desired to a belt) is illustrated. The process comprises placing the mould in a frame, removing the bottom lid, lifting the bottom lid and the mould, removing the top lid, releasing the cheese from the mould and placing the cheese in the brine bath (or on a belt). In this particular process, which is one out of many examples, gravity is used for releasing the cheese from the hollow body.

In fig 16a, a hollow body 1600 is placed in a frame 1602. By having the hollow body 1600 provided with an upper edge 1604 the mould can be kept in position by the frame.

In fig 16b, a device 1606 is attached to a top lid 1608. When having removed the bottom lid, the top lid is lifted. Due to friction between side walls of the hollow body and the cheese and/or adhesion between the top lid 1606 and the cheese, not only the top lid, but also the hollow body and the cheese are lifted up, as illustrated in fig 16c.

The upward movement of the hollow body is stopped when a lower edge 1610 of the hollow body reaches the frame 1602. Since the top lid is not attached to the hollow body and provided that the adhesion between the top lid and the cheese is not greater than the friction between the cheese and side walls of the hollow body, the top lid will continue and may in this way be removed from the mould. This can be enforced by releasing the top lid at one side of the cheese surface a bit earlier "peeling-off the lop lid".

As illustrated in fig 16d, as soon as the top lid is removed, the hollow body will fall downwards by gravity until it is suddenly stopped by the frame 1600. The sudden stop of the hollow body will provide for that the cheese will suddently in an impuls release from the mould body surfaces and continues to fall down into the brine bath (or alternatively onto a belt), as illustrated in fig 16e. More particurarly, the inertia of the cheese will be greater than the static friction of the walls. If the cheese does not leave the hollow body, the hollow body can be lifted and released again.

Since the properties of the cheese are most often carefully controlled and followed, the dimensions and properties of the hollow body, the bottom lid and the top lid may be adapted to fit a particular cheese.

Apart from advantages related to moulding and de-moulding, the mould comprising the hollow body has beneficial cleaning properties.

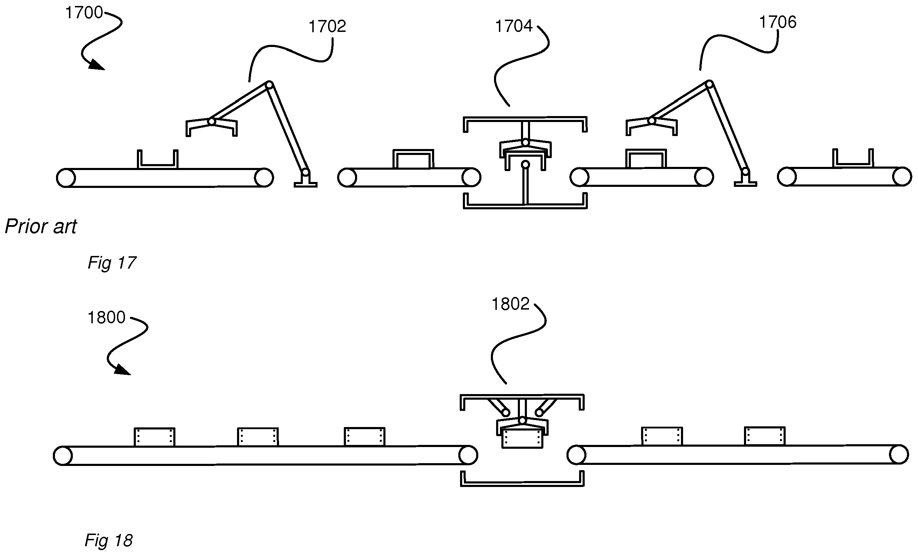

Fig 17 illustrates an example of a cleaning line 1700 of today for the traditional mould. In this particular example a first robot arm 1702 is turning the traditional mould upside down. After being turned upside down the traditional mould is transferred to a cleaning station 1704 in which a combination of water and cleaning detergents is sprayed onto / into the mould. After being cleaned the mould is transferred to a second robot arm 1706 that turns the mould to an upright position.

In order to make sure that curd residues are not caught in the mould, it is usual to let the mould drain / dry placed upside down, and then turns it to upright position afterwards.

Since the mould comprising the hollow body does not constitute a closed end, as the traditional mould, there is no need to turn the mould before and after cleaning. Therefore, a cleaning station 1800 for the mould does not need to comprise devices for turning the mould, as illustrated in fig 18.

The mould can be transported to a cleaning station 1802 in which the mould are held in place while water and/or cleaning detergents are flushed through the hollow body.

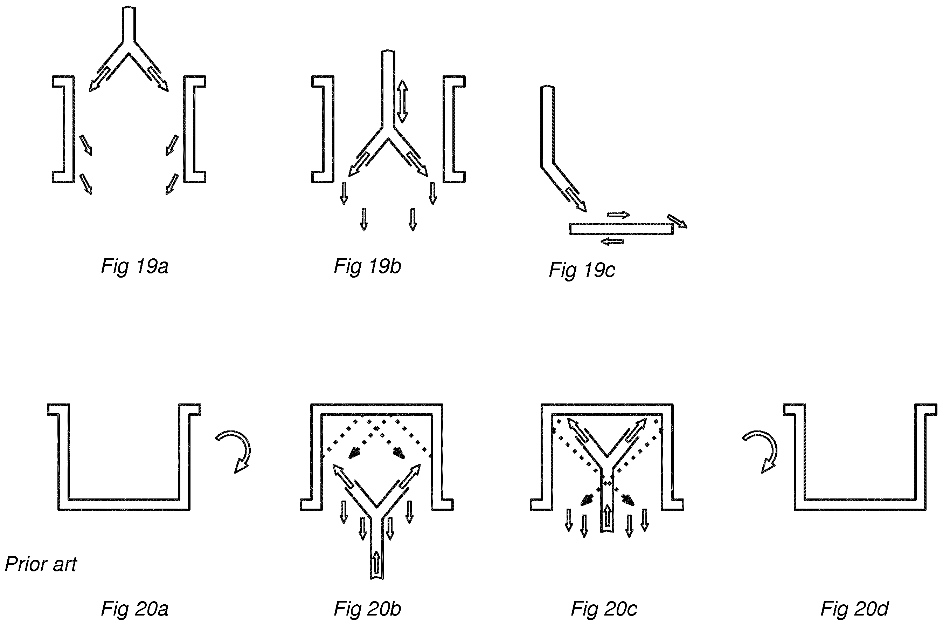

Fig 19a-b illustrates an example of a cleaning station for the hollow body. As illustrated in fig 19a, a nozzle may be placed inside the hollow body such that side walls of the hollow body can be flushed by water and/or cleaning detergents.

In order to make sure that each sections of the hollow body is cleaned properly the nozzle may be moved vertically during the cleaning, as illustrated in fig 19b. The bottom plate may be moved underneath a cleaning nozzle flushing off fouling from it, or a nozzle is moving around or to it, as illustrated in fig 19c

Fig 20a-d illustrates a common approach for cleaning traditional moulds. The traditional mould, as illustrated in fig 20a, is turned upside down before a nozzle is placed inside the traditional mould, as illustrated in fig 20b. In order to cover all sections the nozzle may be moved vertically during the cleaning, as illustrated in fig 20c. After the traditional mould has been cleaned and drained / dried, it is turned again to an upright position, as illustrated in fig 20d.

The main cleaning advantages of the hollow mould body and separated mould bottom beside the minimised handling (turning) requirements are that the mould become an open construction with less difficult to clean edges. Open construction implying that used cleaning fluid and removed fouling are push away from the incoming cleaning fluids not interfering with it when reflecting back as at traditional moulds (fouling is often circulating around as they become part of the incoming cleaning fluid streams (captured by it at its way out). Thus the impact of cleaning is significantly improved (returning fluids do not interfere with incoming fluids), released fouling is running out in once (no captured by incoming fluids) and difficult to cleaning edges between bottom and body are not present at cleaning stage.

Instead of using a nozzle, or in combination with using a nozzle, the mould can be cleaned by being submerged.

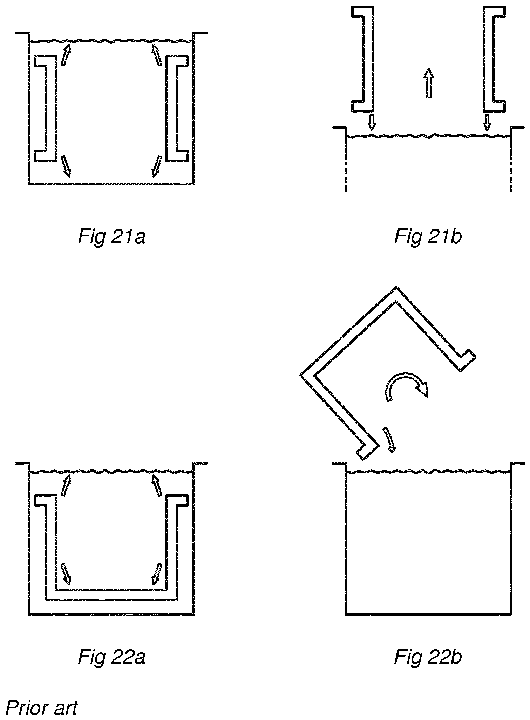

Fig 21a illustrates a mould comprising a hollow body submerged in a cleaning solution. The cleaning solution may comprise of cleaning detergents and/or water. As a complement, in order to provide for that the mould is properly cleaned, heat, air, flows or vibrations may be added. After being submerged, the mould is lifted up from the cleaning bath, as illustrated in fig 21b.

If using a similar approach for a traditional mould, as illustrated in fig 22a-b, the traditional mould is first submerged into the cleaning bath, as illustrated in fig 22a, then after being lifted up from the cleaning bath the mould is turned upside down, as illustrated in fig 22b, such that the mould can dry /drain without curd residues are captured in the traditional mould, often compromising with a flush out of the turned mould (not drawn).

The advantage of having the mould comprising the hollow body in this respect is that curd residues are less likely to be captured in the hollow body. Further, since the hollow body can be reached from two ends, the hollow body is easier to clean than the traditional mould. In addition the traditional needs to be turned, something that is not necessary for the mould comprising the hollow body.

The invention has mainly been described above with reference to a few embodiments. However, as is readily appreciated by a person skilled in the art, other embodiments than the ones disclosed above are equally possible. The scope of the invention is limited by the appended claims.

## Claims

1. A method comprising
placing curd in a mould (1601), said mould comprising a hollow body (1600) provided with a first opening (1605) and a second opening (1607),
applying a pressure force on said curd such that said curd is transformed into a cheese and such that said cheese is moved towards said second opening (1607), and
releasing said cheese from said mould (1601) via said second opening (1607), by exerting a releasing force directed towards said second opening (1607) on said cheese, which is achieved by
- providing for that said hollow body (1600) is moving towards said second opening (1607) by letting said hollow body (1600) fall down, and
- stopping said hollow body (1600) from moving towards said second opening (1607) such that a resulting inertia of said cheese will give rise to said releasing force by providing said hollow body (1600) with an outer edge (1604), and having an element (1602) capturing said hollow body (1600) by using said outer edge (1604).

2. The method according to claim 1, wherein said releasing force is provided by a pusher arm (1606) provided via said first opening.

3. The method according to claim 1 or 2, wherein said curd is placed in said mould via said first opening.

4. The method according to claim 3, wherein a second lid, placed in said hollow body, is moved towards said second opening as curd is placed in said mould via said first opening.

5. The method according to any one of claims 1 to 4, wherein said curd is placed in said mould via said second opening.

6. The method according to claim 5, wherein a first lid, placed in said hollow body, is moved towards said first opening as curd is placed in said mould via said second opening.

## Patentansprüche

1. Verfahren, Folgendes umfassend:
Platzieren eines Käsebruchs in einer Form (1601), wobei die Form einen Hohlkörper (1600) umfasst, der mit einer ersten Öffnung (1605) und einer zweiten Öffnung (1607) versehen ist,
Ausüben eines Drucks auf den Käsebruch, sodass der Käsebruch in einen Weichkäse umgewandelt wird und sodass der Weichkäse in Richtung der zweiten Öffnung (1607) bewegt wird, und
Lösen des Weichkäses aus der Form (1601) über die zweite Öffnung (1607) durch das Aufwenden einer auf die zweite Öffnung (1607) ausgerichteten Lösekraft auf den Weichkäse, was durch Folgendes erreicht wird:
- dafür sorgen, dass sich der Hohlkörper (1600) in Richtung der zweiten Öffnung (1607) bewegt, indem der Hohlkörper (1600) fallen gelassen wird, und
- Abhalten des Hohlkörpers (1600) davon, sich in Richtung der zweiten Öffnung (1607) zu bewegen, sodass eine resultierende Trägheit des Weichkäses die Lösekraft hervorruft, indem der Hohlkörper (1600) mit einer Außenkante (1604) versehen wird und ein Element (1602) aufweist, das den Hohlkörper (1600) unter Verwendung der Außenkante (1604) festhält.

2. Verfahren nach Anspruch 1, wobei die Lösekraft durch einen über die erste Öffnung bereitgestellten Schieberarm (1606) bereitgestellt wird.

3. Verfahren nach Anspruch 1 oder 2, wobei der Käsebruch über die erste Öffnung in der Form platziert wird.

4. Verfahren nach Anspruch 3, wobei ein zweiter, im Hohlkörper platzierter Deckel in Richtung der zweiten Öffnung bewegt wird, wenn der Käsebruch über die erste Öffnung in der Form platziert wird.

5. Verfahren nach einem der Ansprüche 1 bis 4, wobei der Käsebruch über die zweite Öffnung in der Form platziert wird.

6. Verfahren nach Anspruch 5, wobei ein erster, im Hohlkörper platzierter Deckel in Richtung der ersten Öffnung bewegt wird, wenn der Käsebruch über die zweite Öffnung in der Form platziert wird.

## Revendications

1. Procédé, comprenant les étapes suivantes:
placer du lait caillé dans un moule (1601), ledit moule comprenant un corps creux (1600) pourvu d'une première ouverture (1605) et d'une seconde ouverture (1607),
appliquer une force de pression sur ledit lait caillé de telle sorte que ledit lait caillé soit transformé en un fromage et de telle sorte que ledit fromage soit déplacé en direction de ladite seconde ouverture (1607), et
démouler ledit fromage dudit moule (1601) par l'intermédiaire de ladite seconde ouverture (1607), en exerçant sur ledit fromage une force de démoulage orientée en direction de ladite seconde ouverture (1607), ce qui est réalisé:
en s'assurant que ledit corps creux (1600) se déplace en direction de ladite seconde ouverture (1607) en laissant ledit corps creux (1600) tomber, et
en arrêtant le déplacement dudit corps creux (1600) en direction de ladite seconde ouverture (1607) de telle sorte qu'une inertie résultante dudit fromage génère ladite force de démoulage en dotant ledit corps creux (1600) d'un bord extérieur (1604), et présentant un élément (1602) qui capture ledit corps creux (1600) en utilisant ledit bord extérieur (1604).

2. Procédé selon la revendication 1, dans lequel ladite force de démoulage est fournie par un bras de poussée (1606) qui est amené par l'intermédiaire de ladite première ouverture.

3. Procédé selon la revendication 1 ou 2, dans lequel ledit lait caillé est placé dans ledit moule par l'intermédiaire de ladite première ouverture.

4. Procédé selon la revendication 3, dans lequel un second couvercle, placé dans ledit corps creux, est déplacé en direction de ladite seconde ouverture lorsque le lait caillé est placé dans ledit moule par l'intermédiaire de ladite première ouverture.

5. Procédé selon l'une quelconque des revendications 1 à 4, dans lequel ledit lait caillé est placé dans ledit moule par l'intermédiaire de ladite seconde ouverture.

6. Procédé selon la revendication 5, dans lequel un premier couvercle, placé dans ledit corps creux, est déplacé en direction de ladite première ouverture lorsque le lait caillé est placé dans ledit moule par l'intermédiaire de ladite seconde ouverture.
